(19) Europäisches Patentamt
European Patent Office
Office européen des brevets

(11) **EP 2 899 695 B1**

(12) **EUROPEAN PATENT SPECIFICATION**

(45) Date of publication and mention
of the grant of the patent:
**30.05.2018 Bulletin 2018/22**

(51) Int Cl.:
***G06T 17/20*** *(2006.01)*

(21) Application number: **14152728.3**

(22) Date of filing: **27.01.2014**

(54) **Method, system and computer program product for 3D objects graphical representation**

Verfahren, System und Computerprogrammprodukt zur graphischen Darstellung von 3D-Objekten

Procédé, système et produit de programme informatique pour représentation graphique d'objets en 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.07.2015 Bulletin 2015/31**

(73) Proprietors:
• **Université de Nice**
**06130 Nice Cedex 2 (FR)**
• **Centre National de la Recherche Scientifique**
**75794 Paris Cedex 16 (FR)**

(72) Inventors:
• **Antonini, Marc**
**06200 Nice (FR)**
• **Meftah, Anis**
**06220 Vallauris (FR)**
• **HIDD FONTELES, Leonardo**
**06000 Nice (FR)**
• **Payan, Frédéric**
**06900 Sophia-Antipolis (FR)**

(74) Representative: **Lopez, Frédérique et al**
**Marks & Clerk France**
**Immeuble Visium**
**22 Avenue Aristide Briand**
**94117 Arcueil Cedex (FR)**

(56) References cited:
• **GARLAND M ET AL: "Simplifying surfaces with color and texture using quadric error metrics", VISUALIZATION '98. PROCEEDINGS RESEARCH TRIANGLE PARK, NC, USA 18-23 OCT. 1998, PISCATAWAY, NJ, USA,IEEE, US, 18 October 1998 (1998-10-18), pages 263-269,542, XP010321063, DOI: 10.1109/VISUAL.1998.745312 ISBN: 978-0-8186-9176-8**
• **Low, K.-L. and Tan, T.-S.: "Model Simplification Using Vertex-Clustering", Symposium on Interactive 3D Graphics, 1997, pages 75-81, XP002726546, RI, USA Retrieved from the Internet: URL:https://www.comp.nus.edu.sg/~tants/Paper/simplify.pdf [retrieved on 2014-07-02]**
• **GUSKOV I ET AL: "Hybrid meshes: Multiresolution using regular and irregular refinement", PROCEEDINGS OF THE 18TH. ANNUAL SYMPOSIUM ON COMPUTATIONAL GEOMETRY. (SCG'02),, 5 June 2002 (2002-06-05), pages 264-272, XP002507938, ISBN: 978-1-58113-504-6**
• **Boubekeur, T. and Shlick, C.: "GPU Gems 3 - Chapter 5 - Generic Adaptive Mesh Refinement", , 17 July 2009 (2009-07-17), XP002726547, Retrieved from the Internet: URL:http://http.developer.nvidia.com/GPUGems3/gpugems3_ch05.html [retrieved on 2014-07-02]**

## Description

## Technical Field

The present invention relates to the field of multidimensional digital data processing and more particularly to a method, system and computer program product for 3D objects graphical representation.

## Background Art

Thanks to the spectacular development of acquisition systems, more and more detailed 3D volume data are acquired. These 3D data have huge sizes which easily exceed many terabytes and can reach the petabyte. The graphical representation of the 3D surfaces is commonly handled as polygons meshes, and it becomes current to have meshing models with billions of polygons.

Various meshing techniques are described in the article of F. Payan and C. Roudet titled « Remaillage semi-régulier pour les maillages surfaciques » available in Revue Électronique Francophone d'Informatique Graphique, Volume 5, Numero 1, pp. 27-40, 2011. As detailed in the article, the geometry of the meshes is dense and the connectivity of the meshes is arbitrary. This is a problem which requires remeshing the representation of the meshes to lower its complexity to obtain a more regular connectivity. In "Simplifying Surfaces with Color and Texture using Quadric Error Metrics", IEEE, 1998, pp. 263-269 Michael Garland and Paul S. Heckbert disclose a method for simplifying complex polygonal surface models. It is based on an iterative process, where at each iteration the lowest-cost edge is extracted and contracted. Many remeshing approaches have been proposed up to date. The semi-regular remeshing approach is one that is particularly adapted to the representation of a multi-resolution mesh. Generally speaking, on a first step, a simplification operation is applied to an original input mesh to generate a base mesh. On a second step, a refinement operation is applied on the base mesh, commonly also denoted as coarse mesh, to obtain a semi-regular mesh.

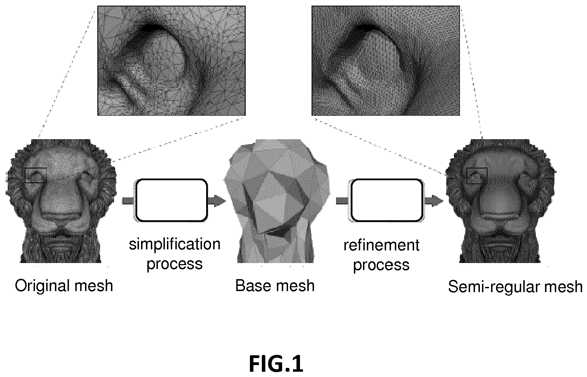

Figure 1 is a general illustration of the remeshing process. An original mesh as shown on the left is first simplified to create a coarse mesh which is then refined to obtain a semi-regular mesh as shown on the right of the figure.

The simplification step, in known semi-regular remeshing processes, includes a parameterization operation that allows linking the original 3D surface of the object to its 2D representation.

However, the parameterization is a complex operation which prevents using it for high resolution meshing surfaces. And none of the known remeshing methods using parameterization is satisfactory for processing high resolution 3D objects, particularly for computer graphical representation.

Thus, there is the need for a solution to solve the aforementioned problems. The present invention offers such solution.

## Summary of the invention

An object of the invention as defined in the appended claims is to provide a semi-regular remeshing method that does not require a 3D-to-2D parameterization phase.

Advantageously, the proposed method comprises a first step of simplifying the input mesh to create a base mesh, and a second iterative step of successively refining the base mesh to obtain the semi-regular mesh.

Advantageously, the geometry of the surface of the input mesh is used during the iterative refinement step.

Advantageously, the method is suitable for handling out-of-core meshing structure.

According to a first embodiment of the present invention, there is provided a method as further described in the appended independent claim 1.

Particularly, a computer implemented method of generating a three-dimensional (3D) multi-resolution meshing structure having 'n' levels of details (LOD) is described. The method comprises the steps of:

- creating a base mesh from a 3D input mesh; and
- iteratively refining the base mesh to match the surface of the 3D input mesh by:

  - applying a regular subdivision on a ith level of detail of the base mesh to obtain a (i+1)th level of detail; and
  - optimizing the (i+1)th level of details by applying a constrained vertex clustering method on the surface of the 3D input mesh.

The regular subdivision of the refinement step allows generating output vertices positioned at a mid-path cluster frontier over the 3D input mesh surface, and having the (i+1)th level of detail composed of the output vertices of the ith level of detail plus the output vertices issued from the regular subdivision of the ith level.

Further embodiments are described in the appended dependent claims.

According to yet another embodiment of the present invention there is provided an apparatus comprising means adapted for carrying out each step of the method according to the different embodiments of the invention.

There is also provided a computer readable medium having encoded thereon a computer program comprising instructions for carrying out the steps of the method of the invention when the computer program is executed on a computer.

Further advantages of the present invention will become clear to the skilled person upon examination of the drawings and detailed description. It is intended that any additional advantages be incorporated therein.

**Description of the drawings**

Embodiments of the present invention will now be described by way of examples with reference to the accompanying drawings in which:

Figure 1 shows an illustration of a semi-regular remeshing process;

Figure 2 is a general flow chart of the remeshing process of the present invention;

Figure 3 shows a general flow chart of the three steps of the simplification process in a preferred embodiment of the present invention;

Figure 4 details the seed optimization step of the simplification process of figure 3;

Figure 5 shows a flow chart of the iterative refinement process in a preferred embodiment of the present invention;

Figure 6 shows a flow chart of the seed optimization steps of the refinement process of figure 5;

Figure 7 depicts a general computer environment to operate the present invention.

**Detailed description of the invention**

It is to be appreciated that the same elements are referenced by the same numerals in all figures.

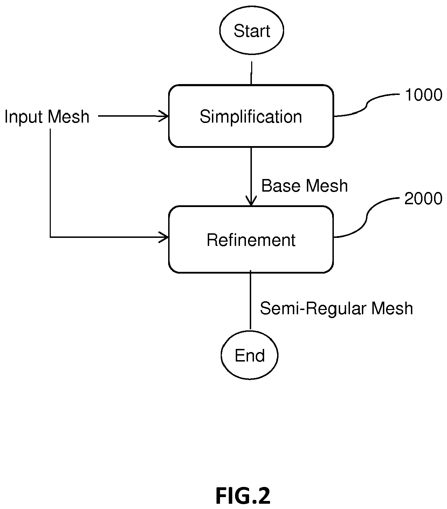

Going first to figure 2, a general flow chart of the remeshing process of the present invention is now described. Generally speaking, the remeshing process may be implemented as part of a computer as a first module (1000) for processing the simplification operation and a second module (2000) for processing the refinement operation of the present invention. The simplification module (1000) receives data representing an original mesh to be processed. The simplification module generates as output a base mesh. In a preferred embodiment, a simplification operation based upon vertex clustering constrained on the 3D input mesh surface is implemented.

Alternatively, other simplification algorithms can be used to generate the base mesh such as the well-known « Valette » from S. Valette and J.M. Chassery, « Approximated Centroidal Voronoi Diagrams for Uniform Polygonal Mesh Coarsening » in Computer Graphics Forum (Eurographics 2004 proceedings, vol. 23, no. 3, pp. 381-389, 2004), the « Scopigno » from P.Cignoni, C.Rocchini, C.Montani, R.Scopigno, « External Memory Management and Simplification of Huge Meshes » in IEEE Trans. on Visualization and Comp. Graph., Vol. 9, no. 4, pp. 525 - 537, 2003, the « VSA » from David Cohen-Steiner, Pierre Alliez, Mathieu Desbrun, « Variational shape approximation » in ACM Transactions on Graphics (TOG), vol. 23, no.3, pp. 905-914, 2004 or the « Q-slim » from M. Garland and P. Heckbert « Surface Simplification Using Quadric Error Metrics » in Proceedings of SIGGRAPH 97.

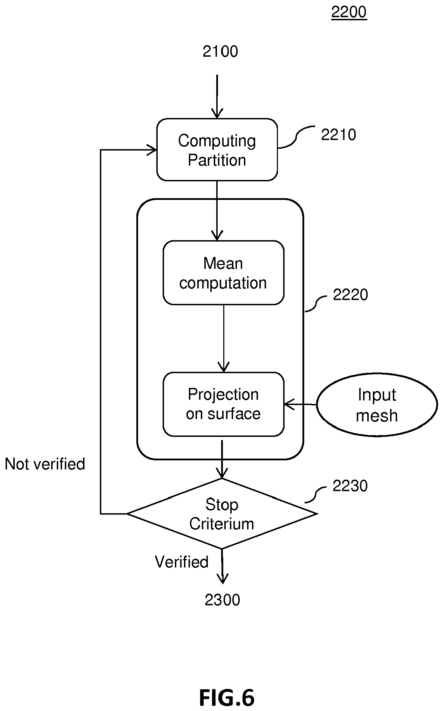

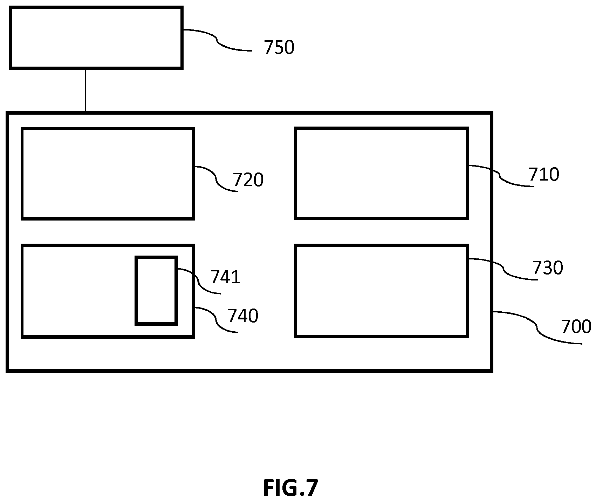

The base mesh data output from the simplification module are then input to a refinement module (2000) to produce a semi-regular mesh. The refinement module also receives as additional inputs the data representing the original mesh to execute the refinement operation according to the present invention and as it will be further detailed with reference to figures 6 and 7.

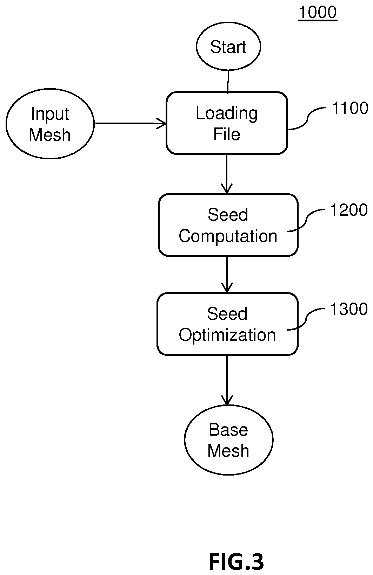

Figure 3 shows in more details the steps executed by the simplification module (1000) of figure 2 in a preferred embodiment.

On a first step (1100), the data representing the input mesh are loaded into a computer memory. Next, a computation (1200) is done to determine an initial group of seeds, and an optimization operation (1300) is done to optimize the initial group of seeds. A base mesh is output.

As it is well known by a person skilled in the art, the seeds initialization (1200) depends on various constraints in order to preserve the main characteristics of the original mesh such as the geometry boundaries (holes), the texture boundaries, the sharp features, the genus or the input mesh density among others characteristics.

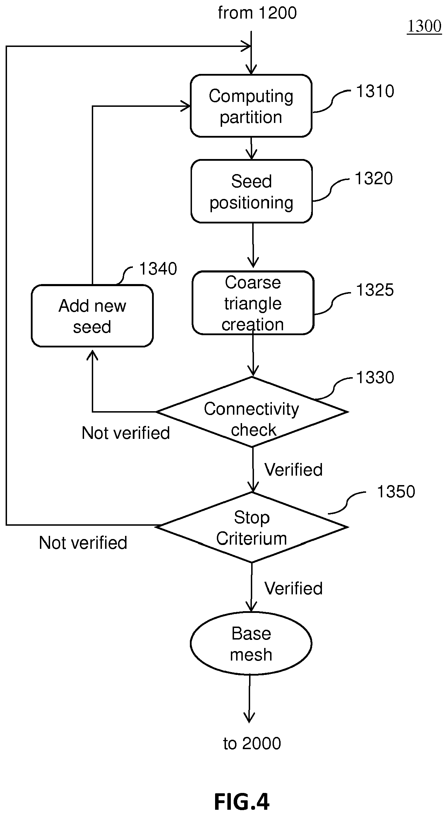

Figure 4 shows in more details the seed optimization step (1300) of figure 3.

In a first step (1310), the process allows computing the seeds partitioning (a partition is composed by clusters, each of them represented by one seed) for the initial group of seeds generated during the seed initialization step (1200). In a preferred embodiment, the geodesic distance $d_g(s, \hat{s}_i)$ (or any approximation) between two vertices under a constraint on the normal associated to the vertices, is minimized.

For ease of clarity and comprehension of the various equations, the following parameters represent:

- *'s'* : a vertex belonging to the original mesh ;
- *'$P_i$'* : a ith cluster of the partition;
- *'$\hat{s}_i$'* : a seed of a ith cluster *'$P_i$'*, i.e. a vertex belonging to the output semi-regular mesh *'$S_r$'*;
- *'$n_s$'* : a normal of the input mesh surface at vertex *'s'*;
- *'$n_{\hat{s}i}$'* : a normal at vertex *'$\hat{s}_i$'*

Basically, all vertices belonging to the same cluster $P_i$ - i.e. which minimize the geodesic distance with respect to the seed of $P_i$ - should have the closest normals as possible.

This latter property may be mathematically expressed by the following equation (1):

$$\emptyset(s, \hat{s}_i) = d_g(s, \hat{s}_i) + \lambda d\left(n_s, n_{\hat{s}_i}\right) \forall \hat{s}_i \in s_r \quad (1)$$

In a preferred embodiment, the optimal partition for the entire mesh is obtained by minimizing the function of equation (1) for all vertices *'s'* of the input mesh.

Going now to the next step (1320) of figure 4, the process allows computing the optimal positioning of the seeds inside each cluster $P_i$.

To compute the optimal position of the seeds in each cluster, one can minimize the *'$L^2$'* distance $d(s, \hat{s}_i)$ constrained to the distance of all vertices *'s'* belonging to the same cluster. This can be achieved by minimizing between two vertices the criterion of the following equation (2):

$$\psi(s, \hat{s}_i) = d(s, \hat{s}_i) \quad (2)$$

In a preferred embodiment, the optimal solution is obtained by minimizing in $\hat{s}_i$ the following function (3) where $d(s, \hat{s}_i)$ in (2) is expressed as the *'$L^2$'* distance and *'$\rho(s)$'* represents any density function evaluated at a given vertex *'s'*:

$$\Psi = E[d] = \sum_i \sum_{s \in P_i} \|s - \hat{s}_i\|^2 \rho(s) \quad (3)$$

The skilled man would appreciate that the solution of this minimization problem is given by the zero-order condition such as equation (4) below:

$$\frac{\delta\Psi}{\delta\hat{s}_i} = 0 \quad (4)$$

which admits a closed-form solution given by equation (5):

$$\tilde{s}_i = \frac{\sum_{s \in P_i} s\rho(s)}{\sum_{s \in P_i} \rho(s)} \quad (5)$$

Next, $\tilde{s}_i$ is projected onto the surface of the input mesh for the next iteration. The projection may be done by positioning $\tilde{s}_i$ at the closest vertex *'s'* in cluster *'$P_i$'*.

On a next step (1325), the process allows creating coarse triangles and triangles connectivity between the coarse triangles.

Next step (1330) allows verifying the correctness of the coarse triangle connectivity, by checking if the seeds of the base mesh respect a plurality of criteria in order to validate the base mesh triangulation obtained at previous step.

If the base mesh does not verify the criteria (branch Not verified), new seeds are added (step 1340) and the process loops back to the computation of new clusters (step 1310).

In a preferred embodiment the connectivity criteria to be checked and the conditions for inclusion of new seeds are listed below:

- a cluster $P_i$ that contacts a surface boundary must have its seed on that boundary. If this condition fails, a new seed is added on the boundary of the surface within cluster $P_i$;
- a cluster $P_i$ must have a zero genus. If this condition fails, a new seed is added at a vertex adjacent to the seed vertex of cluster $P_i$;
- the boundary of a cluster $P_i$ can only consist in a single connected component. If this condition fails, a new seed is added at a vertex adjacent to the seed vertex of the cluster $P_i$;
- a cluster $P_i$ that is adjacent to another cluster $P_j$ should not have more than one neighbor along each cluster boundary curve. If this condition fails, a new seed is added at a vertex adjacent to the cluster boundary curve;
- any pair of cluster $P_i$ cannot touch along more than a single tile boundary curve. If this condition fails, a new seed is added at a vertex adjacent to the shorter among the offending cluster boundary curves.

The person skilled in the art would alternatively define others criteria.

Going back to step 1330 when all criteria are verified (branch Verified), meaning the coarse triangle connectivity is satisfactory, the process continues to step (1350) to check a stop criterion in order to terminate the seed optimization process. In a preferred embodiment, the stop criterion consists in checking the condition of the following equation (6):

$$\frac{(\Phi^{k-1} - \Phi^k)}{\Phi^{k-1}} < \varepsilon \qquad (6)$$

where 'ε' is a threshold defined by the user, with a clustering error at an iteration 'k' being defined by equation (7) :

$$\Phi^k = \sum_i \sum_{s \in P_i} \Phi(s, \hat{s}_i) \qquad (7)$$

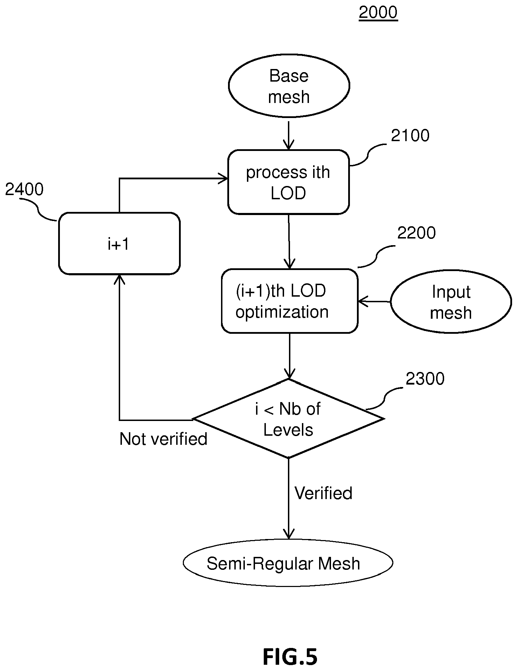

After termination of the simplification process providing a base mesh, the process enters the refinement process. Figure 5 shows the main steps executed by the refinement module (2000) of the present invention. Once the base mesh is created, the process allows entering an iterative process as further described.

Generally speaking, the refinement process allows applying a regular subdivision on a ith Level Of Detail (LOD) to obtain a (i+1)th level of detail, thereby obtaining vertices positioned at the mid-path cluster frontier over the 3D input mesh surface. The (i+1)th level of detail is composed then of the output vertices of the ith level of detail plus the output vertices issued from the regular subdivision of the ith level.

Step 2100 allows setting the process at a (i+1)th level of detail by applying the regular subdivision as previously described, and next on step 2200 the process allows optimizing the (i+1)th level as further detailed with reference to figure 6.

Next step 2300 checks if all levels have been processed to provide the semi-regular mesh (branch Verified), otherwise the process loops back to step 2100 to apply a regular subdivision onto the next level (2400).

Going to figure 6, the steps of the optimization process of the refinement operation are now described.

On step 2210, the process allows computing clusters on the ith level of detail set on previous step 2100. In a preferred embodiment, the clusters are computed in a similar way as described for the partition computation of the simplification process in step 1310.

After the clusters computation, the process allows determining on step 2220 the optimal position of the seeds in each cluster. To achieve in a preferred embodiment, one can minimize the $L^2$ distance $d(s, \hat{s}_i)$ under a constraint, preserving the regularity of the input mesh.

This can be written as minimizing between two vertices the following criterion (8):

$$\psi(s, \hat{s}_i) = d(s, \hat{s}_i) + \mu \sum_{j \in V_{\hat{s}_i}} \alpha_j\, d(\hat{s}_j, \hat{s}_i) \qquad (8)$$

where $'V_{\hat{s}i}'$ defines the (One-ring neighborhood) of $\hat{s}_i$ in $S_r$, i.e. all vertices of $S_r$ connected to $\hat{s}_i$. The weights $\alpha_j$ are preferably chosen to limit the displacement of $\hat{s}_i$ during the optimization phase.

The optimal solution is obtained by minimizing the following function (9):

$$\Psi = \mathrm{E}[d] + \mu \sum_i \sum_{j \in V_{\hat{s}_i}} \alpha_j \, d(\hat{s}_j, \hat{s}_i)$$

$$= \sum_i \sum_{s \in P_i} \|s - \hat{s}_i\|^2 \rho(s) + \mu \sum_i \sum_{j \in V_{\hat{s}_i}} \alpha_j \left\|\hat{s}_j - \hat{s}_i\right\|^2$$

The solution of this minimization problem is given by the zero-order condition given by equation (4):

$$\frac{\delta\Psi}{\delta\hat{s}_i} = 0$$

which admits a closed-form solution given by equation (10):

$$\tilde{s}_i = \frac{\sum_{s \in P_i} s\rho(s) + \mu \sum_{j \in V_{\hat{s}_i}} \alpha_j \, \tilde{s}_j}{\sum_{s \in P_i} \rho(s) + \mu \sum_{j \in V_{\hat{s}_i}} \alpha_j} \qquad (10)$$

Once the mean is computed, $\tilde{S}_i$ is projected to $\hat{S}_i$ onto the surface of the input mesh for the next iteration. As an example, the projection can be done by computing the closest vertex $'s'$ to $\tilde{S}_i$ in cluster $'P_i'$.

On a final step 2230, the process allows checking a stop criterion to end the optimization phase (branch Verified) and processing a further level if any (2300), otherwise (branch Not verified) the process loops back to step 2210 to compute a new partition for the current processed level.

Figure 7 shows an example of computer device 700 for operating an embodiment of the present invention. The computer device may be a general purpose computer or personal computer having a central unit (710) and a computer screen (not depicted). The computer device further includes a hard disk drive (HDD) (720) with a limited available storage capacity of 250 gigabytes (Gb) for example as being a common capacity. The computer device (700) also includes a random access memory (RAM) (730) having its own capacity storage for example of 2 Gb. The computer device also includes a graphic card (740), having a video random access memory (VRAM) (741) which capacity is for example 512 megabytes (Mb). A scanning device (750) may be coupled to the hard disk drive of the computer device (700). The scanning device may be used to acquire 3D data which are stored on the hard disk drive. The hard disk drive stores a huge volume of 3D data to describe the original object. In operation, the central unit (710) allows loading a 3D object to be processed from the hard disk drive (720) into the RAM (730). The central unit (710) allows loading the data from the RAM (730) into the VRAM (741). The graphic card (740) allows computing the final rendering and sending it for display on the computer screen. The computer device includes one or more application programs. The application programs may include a simplification application program to operate the simplification process of the present invention and a refinement application program to operate the refinement process of the present invention. Finally, it is to be appreciated that the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

**Claims**

1. A computer implemented semi-regular remeshing method of generating a three-dimensional (3D) multi-resolution meshing structure having 'n' levels of detail (LOD), the method comprising the steps of:

   - creating a base mesh by applying a simplification process on the surface of an original 3D input mesh, the base mesh having 'n' levels of details composed of output vertices; and
   - refining the base mesh by iteratively processing the 'n' levels of details of the base mesh in :

      - applying a regular subdivision on a ith level of detail of the base mesh to obtain a (i+1)th level of detail, wherein the (i+1)th level of detail is composed of output vertices of the ith level of detail plus output vertices issued from the regular subdivision step of the ith level of detail, the output vertices obtained for the (i+1)th level of detail being positioned at a mid-path cluster frontier over the surface of the original 3D input mesh ; and
      - applying a constrained vertex clustering method on the surface of the original 3D input mesh, by minimizing the geodesic distance between two output vertices under a constraint on the normal associated to the two output vertices of the (i+1)th level of detail, thereby optimizing the (i+1)th level of detail; and
      - repeating the previous applying steps until reaching the last level of detail.

2. The method of claim 1 wherein the 3D input mesh is a 3D mono-resolution mesh and the base mesh is created by applying a constrained vertex clustering method on the surface of a 3D input mesh.

3. The method of claims 1 or 2 wherein the step of creating the base mesh consists in applying one of a "Valette", "Scopigno", "VSA" or "Q-slim" algorithm.

4. The method of anyone of claims 1 to 3 wherein the step of creating the base mesh further comprising the steps of determining an initial group of seeds and applying an optimization algorithm to the initial group of seeds to generate the base mesh.

5. The method of claim 4 wherein the optimization algorithm comprises the steps of:

   - computing seeds partitions for the initial group of seeds;
   - computing the optimal positioning of the seeds inside each partition;
   - checking if the connectivity of the seeds of the base mesh verify a plurality of criteria; and
   - verifying a stop criterion.

6. The method of claim 5 wherein the connectivity checking comprises checking one or more of: checking if a cluster that contacts a surface boundary has its seed on that boundary, checking if a cluster has a zero genus, checking if the boundary of a cluster consists in a single connected component, checking if a cluster adjacent to another has more than one neighbor along each cluster boundary curve, checking if any pair of cluster does not touch along more than a single tile boundary curve.

7. The method of anyone of claims 1 to 6 wherein optimizing the (i+1)th level of detail during the refining step further comprises computing clusters on the ith level of detail and determining the optimal position of the seeds in each cluster.

8. The method of claim 7 wherein the optimal position of the seeds in each partition is computed by minimizing the $L^2$ distance $d(s, \hat{s}_i)$ under a constraint preserving the regularity of the semi-regular output mesh.

9. The method of anyone of claims 1 to 8 further comprising a step of receiving data representing the 3D input mesh.

10. A system for generating a three-dimensional (3D) multi-resolution meshing structure having 'n' levels of detail comprising means adapted for carrying out each step of the method according to any one of the claims 1 to 9.

11. A visualization device for visualizing 3D multi-resolution meshing structure having 'n' levels of detail generated by the system of claim 10.

12. A computer readable medium having encoded thereon a computer program comprising instructions for carrying out the steps of the method according to any one of claims 1 to 9 when said computer program is executed on a computer.

**Patentansprüche**

1. Computerimplementiertes semireguläres Netzneuerzeugungsverfahren zum Erzeugen einer dreidimensionalen (3D) Netzstruktur mit mehreren Auflösungen, die 'n' Detailgrade (LOD) hat, wobei das Verfahren die Schritte umfasst:

   - Erzeugen eines Basisnetzes durch Anwenden eines Vereinfachungsprozesses auf die Oberfläche eines ursprünglichen 3D-Eingabenetzes, wobei das Basisnetz 'n' Detailgrade hat, die aus Ausgabevertices zusammengesetzt sind; und
   - Verfeinern des Basisnetzes durch iteratives Verarbeiten der 'n' Detailgrade des Basisnetzes, indem:

      - eine reguläre Unterteilung auf einen i-ten Detailgrad des Basisnetzes angewendet wird, um einen (i+1)-ten Detailgrad zu erlangen, wobei der (i+1)-te Detailgrad aus Ausgabevertices des i-ten Detailgrades plus Ausgabevertices, die aus dem regulären Unterteilungsschritt des i-ten Detailgrades ausgegeben werden, zusammengesetzt ist, wobei die für den (i+1)-ten Detailgrad erlangten Ausgabevertices an einer Wegmitten-Clustergrenze über der Oberfläche des ursprünglichen 3D-Eingabenetzes positioniert werden; und
      - ein Verfahren zur beschränkten Vertexclusterbildung auf die Oberfläche des ursprünglichen 3D-Eingabenetzes angewendet wird, und zwar durch Minimieren der geodätischen Entfernung zwischen zwei Ausgabevertices unter einer Beschränkung auf die Normale, die den zwei Ausgabevertices des (i+1)-ten Detailgrades zugeordnet ist, wodurch der (i+1)-te Detailgrad optimiert wird; und
      - Wiederholen der vorigen Anwendungsschritte bis zum Erreichen des letzten Detailgrades.

2. Verfahren nach Anspruch 1, worin das 3D-Eingabenetz ein 3D-Netz mit einer einzelnen Auflösung ist und das Basisnetz durch Anwenden eines Verfahrens zur beschränkten Vertexclusterbildung auf die Oberfläche eines 3D-Eingabenetzes erzeugt wird.

3. Verfahren nach Anspruch 1 oder 2, worin der Schritt des Erzeugens des Basisnetzes im Anwenden von einem von Folgendem besteht: ein "Valette"-, "Scopigno"-, "VSA"- oder "Q-slim"-Algorithmus.

4. Verfahren nach einem der Ansprüche 1 bis 3, worin der Schritt des Erzeugens des Basisnetzes ferner die Schritte umfasst: Bestimmen einer Anfangsgruppe von Keimen und Anwenden eines Optimierungsalgorithmus auf die Anfangsgruppe von Keimen, um das Basisnetz zu erzeugen.

5. Verfahren nach Anspruch 4, worin der Optimierungsalgorithmus die Schritte umfasst:

   - Berechnen von Keimpartitionen für die Anfangsgruppe von Keimen;
   - Berechnen der optimalen Positionierung der Keime innerhalb jeder Partition;
   - Prüfen, ob die Konnektivität der Keime des Basisnetzes eine Vielzahl von Kriterien erfüllt; und
   - Prüfen eines Abbruchkriteriums.

6. Verfahren nach Anspruch 5, worin die Konnektivitätsprüfung das Prüfen von einem oder mehr von Folgendem umfasst: Prüfen, ob ein Cluster, der eine Oberflächenbegrenzung berührt, seinen Keim auf dieser Begrenzung hat; Prüfen, ob ein Cluster ein Genus Null hat; Prüfen, ob die Begrenzung eines Clusters aus einer einzigen verbundenen Komponente besteht; Prüfen, ob ein Cluster, der an einen anderen angrenzt, mehr als einen Nachbarn entlang jeder Clusterbegrenzungskurve hat; Prüfen, ob irgendein Paar von Clustern sich nicht entlang von mehr als einer einzigen Kachelbegrenzungskurve berührt.

7. Verfahren nach einem der Ansprüche 1 bis 6, worin das Optimieren des (i+1)-ten Detailgrades während des Verfeinerungsschritts ferner umfasst: Berechnen von Clustern auf dem i-ten Detailgrad und Bestimmen der optimalen Position der Keime in jedem Cluster.

8. Verfahren nach Anspruch 7, worin die optimale Position der Keime in jeder Partition durch Minimieren der $L^2$-Ent-

fernung $d(s, \hat{s}_i)$ unter einer Beschränkung, welche die Regularität des semiregulären Ausgabenetzes beibehält, berechnet wird.

9. Verfahren nach einem der Ansprüche 1 bis 8, ferner einen Schritt umfassend: Empfangen von Daten, die das 3D-Eingabenetz darstellen.

10. System zum Erzeugen einer dreidimensionalen (3D) Netzstruktur mit mehreren Auflösungen, die 'n' Detailgrade hat, umfassend Mittel, die zum Ausführen jedes Schritts des Verfahrens nach einem der Ansprüche 1 bis 9 eingerichtet sind.

11. Visualisierungsvorrichtung zum Visualisieren einer durch das System von Anspruch 10 erzeugten dreidimensionalen (3D) Netzstruktur mit mehreren Auflösungen, die 'n' Detailgrade hat.

12. Computerlesbares Medium mit einem darauf codierten Computerprogramm, das Anweisungen zum Ausführen der Schritte des Verfahrens nach einem der Ansprüche 1 bis 9 umfasst, wenn das Computerprogramm auf einem Computer ausgeführt wird.

**Revendications**

1. Procédé de remaillage semi-régulier mis en oeuvre par informatique permettant de générer une structure de maillage multi-résolution tridimensionnelle (3D) qui comporte "n" niveaux de détail (LOD), le procédé comprenant les étapes qui sont constituées par :

    - la création d'un maillage de base en appliquant un processus de simplification sur la surface d'un maillage d'entrée 3D original, le maillage de base comportant "n" niveaux de détail composés de sommets de sortie ; et
    - l'affinage du maillage de base en traitant de façon itérative les "n" niveaux de détail du maillage de base en :

        - appliquant une subdivision régulière sur un i-ième niveau de détail du maillage de base de manière à obtenir un (i + 1)-ième niveau de détail, dans lequel le (i + 1)-ième niveau de détail est composé par des sommets de sortie du i-ième niveau de détail plus des sommets de sortie qui sont issus de l'étape de subdivision régulière du i-ième niveau de détail, les sommets de sortie qui sont obtenus pour le (i + 1)-ième niveau de détail étant positionnés au niveau d'une frontière de groupement de mi-chemin sur la surface du maillage d'entrée 3D original ; et en
        - appliquant un procédé de groupage de sommets sous contrainte(s) sur la surface du maillage d'entrée 3D original, en minimisant la distance géodésique entre deux sommets de sortie sous une contrainte portant sur la normale qui est associée aux deux sommets de sortie du (i + 1)-ième niveau de détail, d'où ainsi l'optimisation du (i + 1)-ième niveau de détail ; et en
        - répétant les étapes d'application précédentes jusqu'à l'atteinte du dernier niveau de détail.

2. Procédé selon la revendication 1, dans lequel le maillage d'entrée 3D est un maillage mono-résolution 3D et le maillage de base est créé en appliquant un procédé de groupage de sommets sous contrainte(s) sur la surface d'un maillage d'entrée 3D.

3. Procédé selon la revendication 1 ou 2, dans lequel l'étape de création du maillage de base est constituée par l'application d'un algorithme pris parmi un algorithme "Valette", un algorithme "Scopigno", un algorithme "VSA" ou un algorithme "Q-slim".

4. Procédé selon l'une quelconque des revendications 1 à 3, dans lequel l'étape de création du maillage de base comprend en outre les étapes consistant à déterminer un groupe initial de noeuds origine et à appliquer un algorithme d'optimisation sur le groupe initial de noeuds origine de manière à générer le maillage de base.

5. Procédé selon la revendication 4, dans lequel algorithme d'optimisation comprend les étapes qui sont constituées par :

    - le calcul de partitions de noeuds origine pour le groupe initial de noeuds origine ;
    - le calcul du positionnement optimum des noeuds origine à l'intérieur de chaque partition ;
    - le contrôle de si la connectivité des noeuds origine du maillage de base vérifie une pluralité de critères ; et

- la vérification d'un critère d'arrêt.

6. Procédé selon la revendication 5, dans lequel le contrôle de connectivité comprend le contrôle d'un ou de plusieurs des points qui suivent : le contrôle de si un groupement qui est en contact avec une frontière de surface a son noeud origine sur cette frontière, le contrôle de si un groupement comporte un genre zéro, le contrôle de si la frontière d'un groupement consiste en une unique composante connectée, le contrôle de si un groupement qui est adjacent à un autre groupement comporte plus d'un voisin le long de chaque courbe de frontière de groupement, le contrôle de si une quelconque paire de groupements ne vient pas en contact le long de plus qu'une unique courbe de frontière de pavé.

7. Procédé selon l'une quelconque des revendications 1 à 6, dans lequel l'optimisation du (i + 1)-ième niveau de détail pendant l'étape d'affinage comprend en outre le calcul de groupements sur le i-ième niveau de détail et la détermination de la position optimum des noeuds origine dans chaque groupement.

8. Procédé selon la revendication 7, dans lequel la position optimum des noeuds origine dans chaque partition est calculée en minimisant la distance $L^2$ $d(s, \overset{\wedge}{s}._i)$ sous une contrainte qui préserve la régularité du maillage de sortie semi-régulier.

9. Procédé selon l'une quelconque des revendications 1 à 8, comprenant en outre une étape de réception de données qui représentent le maillage d'entrée 3D.

10. Système pour générer une structure de maillage multi-résolution tridimensionnelle (3D) qui comporte "n" niveaux de détail, comprenant des moyens qui sont adaptés pour mettre en oeuvre chaque étape du procédé selon l'une quelconque des revendications 1 à 9.

11. Dispositif de visualisation pour visualiser une structure de maillage multi-résolution 3D qui comporte "n" niveaux de détail qui sont générés par le système de la revendication 10.

12. Support lisible par ordinateur comportant, codé sur lui, un programme informatique qui comprend des instructions pour mettre en oeuvre les étapes du procédé selon l'une quelconque des revendications 1 à 9 lorsque ledit programme informatique est exécuté sur un ordinateur.

| Original mesh | simplification process | Base mesh | refinement process | Semi-regular mesh |

## FIG.1

Start

Input Mesh →→ Simplification ⟋ 1000

Base Mesh

Refinement ⟋ 2000

Semi-Regular Mesh

End

**FIG.2**

FIG.3

from 1200

<u>1300</u>

Computing
partition — 1310

Seed
positioning — 1320

— 1340
Add new
seed

Coarse
triangle
creation — 1325

— 1330
Connectivity
check

Not verified

Verified

— 1350
Stop
Criterium

Not verified

Verified

Base
mesh

to 2000

**FIG.4**

2000

Base
mesh

process ith
LOD — 2100

2400

i+1

(i+1)th LOD
optimization — 2200

Input
mesh

i < Nb of
Levels — 2300

Not verified

Verified

Semi-Regular Mesh

**FIG.5**

**FIG.6**

750

720

710

730

700

741

740

**FIG.7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **F. PAYAN ; C. ROUDET.** Remaillage semi-régulier pour les maillages surfaciques. *Revue Électronique Francophone d'Informatique Graphique,* 2011, vol. 5 (1), 27-40
- **MICHAEL GARLAND ; PAUL S. HECKBERT.** Simplifying Surfaces with Color and Texture using Quadric Error Metrics. IEEE, 1998, 263-269
- **S. VALETTE ; J.M. CHASSERY.** « Approximated Centroidal Voronoi Diagrams for Uniform Polygonal Mesh Coarsening » in Computer Graphics Forum. *Eurographics 2004 proceedings,* 2004, vol. 23 (3), 381-389
- External Memory Management and Simplification of Huge Meshes. **P.CIGNONI ; C.ROCCHINI ; C.MONTANI ; R.SCOPIGNO.** Trans. on Visualization and Comp. Graph. IEEE, 2003, vol. 9, 525-537
- **DAVID COHEN-STEINER ; PIERRE ALLIEZ ; MATHIEU DESBRUN.** Variational shape approximation. *ACM Transactions on Graphics (TOG),* 2004, vol. 23 (3), 905-914
- **M. GARLAND ; P. HECKBERT.** Surface Simplification Using Quadric Error Metrics. *Proceedings of SIGGRAPH,* 97